(19) Europäisches Patentamt
European Patent Office
Office européen des brevets

(11) Publication number: 0 525 936 A1

# (12) EUROPEAN PATENT APPLICATION

(21) Application number: **92304096.8**

(51) Int. Cl.$^5$: **C08G 59/68**

(22) Date of filing: **07.05.92**

A request for correction on pages 2 and 13 has been filed pursuant to Rule 88 EPC. A decision on the request will be taken during the proceedings before the Examining Division (Guidelines for Examination in the EPO, A-V, 2.2).

(30) Priority: **29.07.91 US 736841**

(43) Date of publication of application: **03.02.93 Bulletin 93/05**

(84) Designated Contracting States: **DE FR GB**

(71) Applicant: **TEXACO CHEMICAL COMPANY**
**3040 Post Oak Boulevard**
**Houston, Texas 77056(US)**

(72) Inventor: **Waddill, Harold George**
**1607C Coronado Hills Drive**
**Austin, Texas 78752(US)**
Inventor: **Su, Wei-Yang**
**11814 Knights Bridge**
**Austin, Texas 78759(US)**

(74) Representative: **Brock, Peter William et al**
**UROUHART-DYKES & LORD 91 Wimpole Street**
**London W1M 8AH(GB)**

## (54) Accelerator for curing epoxy resins.

(57) 1-isopropyl-2-methyl imidazole is a useful accelerator for the production of epoxy resins, whether cured by anhydrides or by dicyandiamide. Compositions containing 1-isopropyl-2-methyl imidazole as accelerator have a practically useful pot life and provide cured resins which are resistant to heat and chemicals, and can be used for encapsulating electronic components.

EP 0 525 936 A1

This invention relates to an epoxy resin composition comprising a substituted imidazoline as a curing accelerator.

Epoxy resins constitute a class of polymeric materials having a wide range of physical characteristics. The curable resins contain epoxide groups, and are cured by reaction with curing agents to provide cured epoxy resin compositions having certain desirable properties. A catalyst, known in the art as an accelerator, may be added in small amounts to the epoxy resin-curing agent compositions to increase the rate of reaction, to reduce reaction initiation temperature, or both.

It is known that substituted imidazoles have been used as curing agents for epoxy resins. US-A-4931528, for example, discloses the use of 1-isopropyl-2-methyl-imidazole for that purpose.

FR-A-2263265 discloses 2,4-disubstituted imidazolines as reaction accelerators for epoxy resins cured with anhydride curing agents. Improved working life and final products with good dimensional stability were achieved.

DE-A-2259196 teaches the use of 2-ethyl-4-methyl-imidazoline as a catalyst for cross-linking epoxy resins with phthalic anhydride derivatives, to give products with increased heat deflection temperature.

JP-A-56122825 teaches that 2,4-dimethyl imidazoline can be combined with dicyandiamide and a multifunctional epoxy resin to produce a heat resistant laminate.

The object according to the invention is to provide further accelerators for curable epoxy resin compositions.

According to the invention, it has been found that the use of 1-isopropyl-2-methyl-imidazoline as a curing accelerator for epoxy resins provides compositions which exhibit an extended stable pot life, which is better than that shown by dimethylbenzylamine (a known accelerator of comparable activity). The accelerating effect is achieved using much smaller amounts than are necessary with another known accelerator - TMS (dimethylaminomethyl) phenol.

This invention provides a curable epoxy resin composition, comprising an epoxy base resin, an epoxy resin curing agent, and an accelerator comprising 1-isopropyl-2-methyl-imidazoline.

The invention also provides cured resins which are resistant to heat and chemicals, and are useful in such applications as the encapsulation of electronic semiconductor components.

1-isopropyl-2-methyl-imidazoline has the formula:

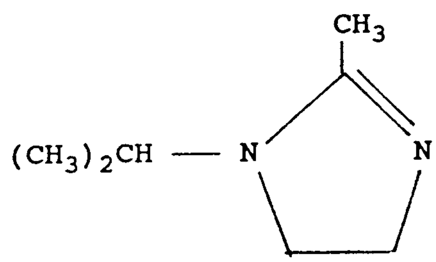

The synthesis of this compound is described in Example 1. In general, it can be prepared by condensing acetic acid with N-isopropylethylene diamine, with the release of two moles of water.

Generally the vicinal polyepoxide compounds are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted, if desired, with other substituents besides the epoxy groups, e.g., hydroxyl groups, ether radicals, and aromatic halogen atoms. These materials typically have an epoxy equivalent weight of 150 to 250.

Preferred polyepoxides are glycidyl ethers prepared by epoxidizing the corresponding allyl ethers, or reacting, by known procedures, a molar excess of epichlorohydrin and an aromatic polyhydroxy compound, i.e., isopropylidene bisphenol, novolac, resorcinol, derivatives, or aromatic amines. The epoxy derivatives of methylene or isopropylidene bisphenols are especially preferred.

A widely used class of polyepoxides which are useful according to the present invention includes the resinous epoxy polyethers obtained by reacting an epihalohydrin, such as epichlorohydrin, with either a polyhydric phenol or a polyhydric alcohol. Typically the epoxy resins have an average of at least 1.8 reactive, 1,2-epoxy groups per molecule. An illustrative, but by no means exhaustive, listing of suitable dihydric phenols includes:

4,4'-isopropylidene bisphenol,
2,4'-dihydroxydiphenylethylmethane,
3,3'-dihydroxydiphenyldiethylmethane,

3,4'-dihydroxydiphenylmethylpropylmethane,
2,3'-dihydroxydiphenylethylphenylmethane,
4,4'-dihydroxydiphenylpropylphenylmethane,
4,4'-dihydroxydiphenylbutylphenylmethane,
2,2'-dihydroxydiphenylditolylmethane, and
4,4'-dihydroxydiphenyltolylmethylmethane.

Other polyhydric phenols which may also be reacted with an epihalohydrin to provide these epoxy polyethers are such compounds as resorcinol, hydroquinone, and substituted hydroquinones, e.g., methylhydroquinone.

Among the polyhydric alcohols which can be reacted with an epihalohydrin to provide these resinous epoxy polyethers are such compounds as ethylene glycol, propylene glycols, butylene glycols, pentane diols, bis-(4-hydroxycyclohexyl) dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g., polyethylene glycols, polypropylene glycols, triglycerol, or dipentaerythritol, polyallyl alcohol, and polyhydric thioethers, such as 2,2'-,3,3'-tetrahydroxydipropylsulfide, mercapto alcohols such as monothioglycerol, and dithioglycerol, polyhydric alcohol partial esters, such as monostearin and pentaerythritol monoacetate, and halogenated polyhydric alcohols such as the monochlorohydrins of glycerol, sorbitol and pentaerythritol.

Another class of polymeric polyepoxides which can be used in accordance with the present invention includes the epoxy novolac resins obtained by reacting, preferably in the presence of a basic catalyst, e.g., sodium or potassium hydroxide, an epihalohydrin, such as epichlorohydrin, with the resinous condensate of an aldehyde, e.g., formaldehyde, and either a monohydric phenol, e.g., phenol itself, or a polyhydric phenol. Further details concerning the nature and preparation of these epoxy novolac resins can be obtained from Lee, H. and Neville, K., Handbook of Epoxy Resins, McGraw Hill Book Co., New York, 1967.

Those skilled in the art will appreciate that the polyepoxide compositions which are useful according to the practice of the present invention are not limited to those containing the above described polyepoxides, but that these polyepoxides are provided here merely as being representative of the class of polyepoxides as a whole.

Preferably, the base resin, which has an epoxide equivalent weight of from 175 to 195, is obtained by condensing epichlorohydrin with 2,2-bis-(p-hydroxyphenyl propane) (i.e. bisphenol A), to form 2,2-bis-[(p-2,3 epoxy propoxy)phenyl] propane.

The vicinal polyepoxide can be cured with either dicyandiamide or an anhydride curing agent.

A brief list of anhydrides for this application includes succinic anhydride; maleic anhydride; methyl-4-endomethylene tetrahydrophthalic anhydride; hexahydrophthalic anhydride; tetrahydrophthalic anhydride; dodecenyl succinic anhydride, and the Diels-Alder adduct of maleic anhydride with a substituted cyclopentadiene. The use of the maleic anhydride adduct of methylcyclopentadiene is shown in Example 2 and Comparative Examples 3 and 4.

A carboxylic acid curing agent may be mixed with the anhydride curing agent. The carboxylic acid may for instance be incorporated in a weight ratio of 5:1 to 1:5 carboxylic acid:anhydride.

The carboxylic acids which may be used are any of the carboxylic acids known in the art for curing epoxy resins. These are, for example: succinic, glutaric, adipic, pimelic, suberic, azelaic, sebacic, oxalic, phthalic, p-aminobenzoic, maleic, aconitic and chlorendic acids; carboxyl-terminated polyester resins and polymeric dimer and trimer fatty acids.

In the preferred method of compounding the compositions, the accelerator is first blended with the curing agent. The amount of accelerator used is generally 0.1 to 10 % based on the amount of epoxy resin, preferably 0.1 to 5 %, most preferably 0.2 to 2 %. The exact amount of accelerator to be used is determined empirically. For example, the exact amounts of epoxy resin and curing agent are selected, according to the physical properties desired. Then a series of test samples can be made up, with a a different amount of accelerator in each sample, over the range of 0.1 to 10 %. The sample with the most desirable curing time for the application is then selected. For example the maximum exotherm temperature during the curing of the epoxy resin at different accelerator concentrations is recorded. A graph of the exotherm temperature against the concentration of accelerator will exhibit a maximum at or near the most effective amount of accelerator. If desired, a second series of test samples can be made up, which includes the sample selected as most effective. The second series is tested in the same manner as the first series, to define more narrowly the composition which yields the most desired properties.

The amount of curing agent used is determined by the functional equivalent weight of the curing agent employed. Generally the number of equivalents of reactive groups is from 0.8 to 1.2 times the number of epoxide equivalents present in the curable epoxy resin composition, with from 0.9 to the stoichiometric

amount being preferred. The exact amount of curing agent will depend primarily on the application for which the cured resin is intended. The amount to be used in a particular formulation can be found, without excessive testing, by a technician trained in the art, for example, by determining the quantity which maximizes a desired physical property. Typically, the property maximized is either the glass transition point (Tg), according to ASTM D-3418, or heat deflection temperature (HDT), according to ASTM D-648.

The epoxy resin compositions may be allowed to self-cure at ambient temperatures of 0 to 45° C. Alternatively, the composition can be cured or post-cured at elevated temperatures up to 175° C for 0.5 to 4 hours, if desired, to achieve the optimum physical properties.

## EXAMPLE 1

Preparation of 1-isopropyl-2-methylimidazoline

A three-litre three-necked flask equipped with a thermometer, addition funnel, condenser, stirrer and nitrogen inlet was charged with 1394g of N-isopropylethylenediamine. Acetic acid (780g) was added over 4 hours. After finishing the acid addition, the mixture was heated under reflux for an hour. The resulting reaction mixture was then distilled to give 1-isopropyl-2-methylimidazoline (b.p. 191° C).

## EXAMPLE 2

A series of curable compositions (Samples A to E) was prepared, and their constitution and reactivity are set out in Table 1 below.

TABLE 1

| Formulation (% by wt.) | (Comp) A | B | C | D | E |
|---|---|---|---|---|---|
| Liquid epoxy resin (EEW 185-192) | 100 | 100 | 100 | 100 | 100 |
| NADIC^R methyl anhydride | 85 | 85 | 85 | 85 | 85 |
| 1-Isopropyl-2-methylimidazoline | - | 0.2 | 0.5 | 1.0 | 2.0 |
| **Reactivity:** | | | | | |
| Gel time, min @ 80°C | - | 832.2 | 357.4 | 260.6 | 112.5 |
| 120°C | >500 | 80.2 | 33.1 | 19.8 | 18.2 |
| 150°C | >500 | 33.7 | 2.1 | 8.9 | 6.1 |
| Pot life, hrs to double viscosity @ 23°C | >200 | >72 | ~44 | ~22 | ~10 |

% by wt. - percentage by weight
EEW - epoxy equivalent weight

Absence of an accelerator resulted in little or no reactivity of anhydride with epoxy resin under test conditions. Addition of small amounts of the imidazoline compound aided the curing process considerably, although reaction at 80° C was still quite sluggish. The system was cured rapidly at the higher temperatures. Systems were quite stable at 23° C, yet cured rapidly at elevated temperatures, ideal behaviour for a number of processing applications.

Structure of NADIC$^R$ methylanhydride, the maleic anhydride adduct of methylcyclopentadiene:

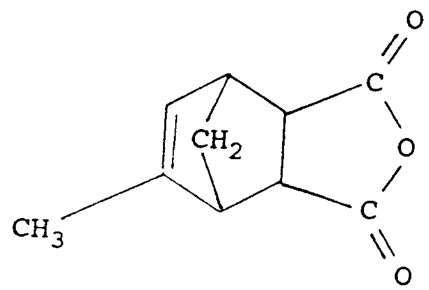

Castings 1/8 inch (3 mm) were prepared from each sample and cured for 4 hours at 80°C and 4 hours at 150°C. Their properties are set out in Table 2 below.

TABLE 2

| SAMPLE | (Comp) A | B | C | D | E |
|---|---|---|---|---|---|
| | 1) | | | | |
| Shore D hardness, 0-10 sec. | - | 87.86 | 85.84 | 90.88 | 85.84 |
| HDT, °C, (1,82 MPa) | - | 148.0 | 156.1 | 157.5 | 158.0 |
| Izod impact strength, J/m | - | 5.87 | 6.41 | 6.94 | 6.94 |
| Tensile strength, MPa | - | 47 | 42 | 44 | 49 |
| Tensile module, MPa | - | 3323 | 3392 | 3268 | 3089 |
| Elongation at break, % | - | 1.5 | 1.4 | 1.5 | 1.8 |
| Flexural strength, MPa | - | 119 | 101 | 95 | 130 |
| Flexural modulus, MPa | - | 3158 | 3103 | 3034 | 2930 |
| % wt gain, 24-h water boil | - | 0.6 | 0.6 | 0.7 | 0.9 |
| 3-h acetone boil | - | 1.5 | 1.5 | 1.5 | 1.7 |
| Compression strength, MPa | | | | | |
| at yield | - | 130 | 128 | 128 | 125 |
| at failure | - | 254 | 288 | 302 | 279 |
| % compression at yield | - | 13.1 | 12.7 | 12.6 | 12.8 |
| at failure | - | 52.7 | 55.0 | 54.9 | 53.4 |

1) Did not cure; remained liquid after cure cycle completed
wt - weight
h - hour

The absence of accelerator in the formulation resulted in essentially no reaction between epoxy and anhydride. Only small amounts of accelerator were required in order to develop a cured product with excellent properties of heat, moisture and chemical resistance. The imidazoline was much more efficient in producing a cured product with superior properties than were a number of widely used accelerators, such as benzyldimethylamine or tris(dimethylaminomethyl)phenol, as will be seen from the (Comparative) Examples 3 and 4, set out below.

**EXAMPLE 3 (Comparative)**

A series of samples A to D was prepared using tris(dimethylamino methyl)phenol (DMP-30) as accelerator. The characteristics of the Samples, and the properties of cured castings (as in Example 2) are set out in Table 3 below.

TABLE 3

| | A | B | C | D |
|---|---|---|---|---|
| Liquid epoxy resin (% by wt.) (EEW 185-192) | 100 | 100 | 100 | 100 |
| NADIC[R] methyl anhydride | 85 | 85 | 85 | 85 |
| Tris(dimethylamino methyl) phenol | 0.2 | 0.5 | 1.0 | 2.0 |
| Reactivity: | | | | |
| Gel time, min @ 80°C | 799.0 | 325.2 | 209.0 | 112.8 |
| 120°C | 68.9 | 33.7 | 24.0 | 16.1 |
| 150°C | >200[1)] | 42.0 | 9.7 | 7.8 |
| Pot life, h to double viscosity @ 23°C | >96 | >96 | ~50 | ~28 |

[1)]Did not vitrify at this temperature

TABLE 3 (Cont.)

| | A | B | C | D |
|---|---|---|---|---|
| Properties of Cured Castings | | | | |
| Shore D hardness, 0-10 sec. | 75-61 | 92-90 | 91-89 | 92-91 |
| HDT, °C, (1,82 MPa) | 31.0 | 62.8 | 117.3 | 139.7 |
| Izod impact strength, J/m | 6.41 | 5.34 | 5.34 | 5.87 |
| Tensile strength, MPa | 9 | 45 | 39 | 28 |
| Tensile module, MPa | 556 | 3875 | 3765 | 3489 |
| Elongation at break, % | 64.9 | 1.3 | 1.1 | 0.8 |
| Flexural strength, MPa | 5 | 92 | 97 | 95 |
| Flexural modulus, MPa | 256 | 3606 | 3434 | 3130 |
| % wt gain, 24-h water boil | 5.6 | 3.3 | 1.3 | 0.9 |
| 3-h acetone boil | [1)] | 12.0 | 3.9 | 1.9 |

[1)]Sample destroyed during test - could not determine property.

Comment: Comparison of the results of Example 2 with those of Example 3 indicates that DMP-30 is as effective an accelerator of epoxy anhydride cure as is 1-isopropyl-2-methylimidazoline (IPMIZ). Reactivities appear to be much alike. However, comparison of properties from Examples 2 and 3 shows that IPMIZ is much more effective than DMP-30 in developing properties at low concentrations. At a concentration of 0.2 % (based on epoxy resin), IPMIZ resulted in quite acceptable properties whereas 2.0 % of DMP-30 was required to develop properties that were still not equivalent to acceleration of cure achieved with the lowest amount of IPMIZ.

**EXAMPLE 4 (Comparative)**

A series of samples A to D was prepared using dimethylbenzylamine (DMBA) as accelerator. The

characteristics of the Samples, and the properties of cured castings (as in Example 2) are set out in Table 4 below.

TABLE 4

| Formulation (% by wt.) | A | B | C | D |
|---|---|---|---|---|
| Liquid epoxy resin (EEW 185-192) | 100 | 100 | 100 | 100 |
| NADIC$^R$ methyl anhydride | 85 | 85 | 85 | 85 |
| Dimethylbenzylamine (DMBA) | 0.2 | 0.5 | 1.0 | 2.0 |
| **Reactivity:** | | | | |
| Gel time, min @ 80°C | 777.7 | 265.2 | 138.5 | 78.0 |
| 120°C | 170.6 | 29.6 | 19.5 | 15.6 |
| 150°C | 1123.6[1)] | 32.7 | 12.0 | 8.6 |
| Pot life, h to double viscosity @ 23°C | ~150 | ~58 | ~8 | 5.5 |

[1)]Formulation slowly vitrified at this temperature

| Properties of Cured Castings | A | B | C | D |
|---|---|---|---|---|
| Shore D hardness, 0-10 sec. | 78-75 | 84-82 | 91-89 | 89-87 |
| HDT, °C, (1,82 MPa) | 46.3 | 86.6 | 127.5 | 140.4 |
| Izod impact strength, J/m | 1.60 | 2.14 | 2.14 | 1.60 |
| Tensile strength, MPa | 19 | 61 | 54 | 35 |
| Tensile module, MPa | 570 | 3634 | 3041 | 2930 |
| Elongation at break, % | 3.5 | 1.6 | 1.9 | 1.2 |
| Flexural strength, MPa | 44 | 112 | 103 | 120 |
| Flexural modulus, MPa | 1669 | 7198 | 3751 | 3068 |
| % wt gain, 24-h water boil | 6.1 | 2.6 | 1.0 | 0.8 |
| 3-h acetone boil | [1)] | [1)] | 3.4 | 2.2 |

[1)]Sample destroyed during boil; could not determine property.

Comments: Comparison of reactivity of dimethylbenzylamine (DMBA) and 1-isopropyl-2-methylimidazoline (IPMIZ) (Examples 1 and 4) indicates that DMBA is less reactive than IPMIZ at lower concentrations, (0.2, 0.5 %) but more reactive at higher concentrations (1-2 %). Study of physical properties obtained with each, however, shows that large amounts of DMBA are required for development of satisfactory properties, and such concentrations would not lead to stable, long pot life. Thus, DMBA would not be as acceptable an accelerator as IPMIZ.

**EXAMPLE 5**

A further series of samples was prepared using 1-isopropyl-2-methylimidazole as accelerator and dicyandiamide as curing agents. The characteristics of the Samples, and the properties of cured castings are set out below in Table 5.

TABLE 5

| | A | B | C | D |
|---|---|---|---|---|
| Liquid epoxy resin (EEW 185-192) (% by wt.) | 100 | 100 | 100 | 100 |
| DICY[1] | 4 | 4 | 4 | 4 |
| Suspending agent[2] | 1 | 1 | 1 | 1 |
| 1-Isopropyl-2-methylimidazole | - | 0.5 | 1.0 | 2.0 |

TABLE 5 (Cont.)

| | A | B | C | D |
|---|---|---|---|---|
| Reactivity: | | | | |
| Gel time, min @ 80°C (100g mass) | >1500 | >1500 | >1500 | 58.8 |
| 120°C | >1500 | 454.2 | 47.2 | 9.4 |
| 150°C | 33.0 | 21.2 | 13.1 | 4.7 |
| Pot life, hours to double viscosity @ 23°C (100g mass) | >172 | >168 | ~100 | 8 |
| Properties of Cured Castings | [3] | | | |
| Shore D hardness, 0-10 sec. | - | 89.85 | 89.88 | 89.86 |
| HDT, °C, (1,82 MPa) | - | 93.7 | 118.8 | 151.0 |
| Izod impact strength, J/m | - | 4.27 | 5.87 | 1.60 |
| Tensile strength, MPa | - | 21 | 30 | 43 |
| Tensile module, MPa | - | 3827 | 3323 | 2992 |
| Elongation at break, % | - | 0.6 | 1.0 | 1.6 |
| Flexural strength, MPa | - | 129 | 93 | 59 |
| Flexural modulus, MPa | - | 3627 | 3344 | 290 |
| % wt gain, 24-h water boil | - | 3.68 | 2.35 | 2.06 |
| 3-h acetone boil | - | 6.13 | 2.30 | 0.29 |

[1]DICY = dicyandiamide; cyanoguanidine
[2]Cab-o-Sil, fumed silica
[3]DICY separated; non-homogenous, incomplete cure. No properties determined.

TABLE OF TEST METHODS

| | |
|---|---|
| Gel Time (minutes) | ASTM D-2471-71 |
| Shore D-Hardness 0-10 seconds | ASTM D-2240 |
| Elongation at Break (%) | ASTM D-638 |
| Heat Deflection Temperature (HDT) (0 ° C,) (1.82 MPa) | ASTM D-648 |
| Izod Impact Strength (J/m) | ASTM D-256 |
| Tensile Strength (MPa) | ASTM D-638 |
| Tensile Modulus (MPa) | ASTM D-638 |
| Flexural Strength (MPa) | ASTM D-790 |
| Flexural Modulus (MPa) | ASTM D-790 |
| Compression Strength at Yield; at Failure (MPa) | ASTM D-695 |
| % Compression at Yield; at Failure | ASTM D-695 |

## Claims

1. A curable epoxy resin composition comprising an epoxy resin, an epoxy resin curing agent and a substituted imidazoline as accelerator characterised in that the substituted imidazoline is 1-isopropyl-2-methyl-imidazoline.

2. A composition according to Claim 1, characterised in that the curing agent is an anhydride curing agent.

3. A composition according to Claim 2, characterised in that the anhydride is employed with a carboxylic acid curing agent.

4. A composition according to Claim 1, characterised in that the curing agent is dicyandiamide.

5. A composition according to any one of Claims 1 to 4, characterised in that the accelerator is used in an amount of 0.1 to 10 % by weight based on epoxy resin.

6. A composition according to any one of Claims 1 to 4, characterised in that the accelerator is used in an amount of 0.1 to 5 % by weight based on epoxy resin.

7. A composition according to any one of Claims 1 to 4, characterised in that the accelerator is used in an amount of 0.2 to 2 % by weight based on epoxy resin.

8. A cured epoxy resin composition obtainable by curing a curable epoxy resin composition according to any one of Claims 1 to 7.

European Patent Office

# EUROPEAN SEARCH REPORT

Application Number

EP 92 30 4096

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 000 418 (VEBA-CHEMIE AKTIENGESELLSCHAFT)<br>* claims *<br>--- | 1 | C08G59/68 |
| A | EP-A-0 378 910 (TEXACO DEVELOPMENT CORPORATION)<br>* claims *<br>--- | 1 | |
| A | US-A-3 631 150 (G. M. GREEN)<br>* column 3, line 65; claims *<br>--- | 1 | |
| A | GB-A-1 467 052 (VEBA-CHEMIE AKTIENGESELLSCHAFT)<br>* page 3, line 1 - line 9; claims *<br>----- | 1 | |
| | | | TECHNICAL FIELDS SEARCHED (Int. Cl.5 ) |
| | | | C08G |

The present search report has been drawn up for all claims

| Place of search | Date of completion of the search | Examiner |
|---|---|---|
| THE HAGUE | 19 OCTOBER 1992 | DERAEDT G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)